Europäisches Patentamt

European Patent Office

Office européen des brevets

(19)

(11) **EP 1 414 154 A1**

(12) **EUROPEAN PATENT APPLICATION**

(43) Date of publication:
  **28.04.2004 Bulletin 2004/18**

(51) Int Cl.⁷: **H03K 17/94**, G01S 17/02,
  H04M 1/60

(21) Application number: **03011911.9**

(22) Date of filing: **27.05.2003**

(84) Designated Contracting States:
  **AT BE BG CH CY CZ DE DK EE ES FI FR GB GR
  HU IE IT LI LU MC NL PT RO SE SI SK TR**
  Designated Extension States:
  **AL LT LV MK**

(71) Applicant: **SIEMENS AKTIENGESELLSCHAFT
  80333 München (DE)**

(72) Inventors:
  • **Hofmann, Michael
    81671 München (DE)**
  • **Wipper, Andreas
    81379 München (DE)**

(54) **Device for detecting the presence of an object**

(57)    A sensor circuitry (106) for a proximity detector (100), comprises photodiode (301) and a differential amplifier (402). The cathode (C) of the photodiode (301) is connected to a inverting input (I1) of the differential amplifier (402), and the anode (A) of the photodiode (301) is connected to a non-inverting input (I2) of the differential amplifier (402).

# FIG 4

EP 1 414 154 A1

**Description**

The rapid growth of mobile communication during the last decade has raised new needs for which mobile terminals are used. A typical example of a new application is the hands-free functionality in which a mobile terminal has different acoustic modes when the device is used in the hands-free mode and like a handset of a conventional telephone, i.e. pressed against the ear of the user.

Such a hands-free mode sets requirements different from the normal handset mode. First of all, because the user is further away from the loudspeaker than in the handset mode, the loudspeaker volume has to be increased.

If the mobile is in hands-free mode, the volume is very high. When the user then brings the mobile close to the ear the volume has to be decreased to a low volume to prevent an acoustic shock and a hearing damage. The characteristics of the microphone need not be changed when switching from handset mode to hands-free mode.

These contradictory requirements between the hands-free mode and the normal handset mode have forced many manufacturers to implement a so-called proximity detector into the mobile terminal. A proximity detector is the component which is usually employed to determine in which mode the handset or mobile device should be.

Further, the proximity detector can also be used when the mobile terminal is about to page for an incoming call. The volume of the ringing tone will be at full if no object is detected in front of the sensor, but if there is an object within the range of the sensor, the ringing volume will be ramped up.

Figure 1C shows the basic components of a proximity detector 100, a device used for detecting the presence of an object. The proximity detector 100 usually comprises an infra-red (IR) light source or emitter 101 with a corresponding emitter circuitry 105, and sensor 103, such as a photodiode, for detecting light reflected from an object. The light emitted from the emitter 101 is passed through a window 102 to the outside of the proximity detector 100. It cannot directly pass to the sensor 103 because of a shielding or wall 104 located between the emitter and the sensor.

The sensor 103 is further connected through a sensor circuitry to means for converting the detected IR-intensity to a logical value, such as Analog-to-Digital Converter ADC 107. The optical elements of a proximity detector are described e.g. in pending European patent application 03003437.5. Further, the mentioned European patent application also discloses the electronical components of a proximity detector, and further discusses some principles of how proximity detecting is performed.

The handling of the sensor's output signal is usually performed such that it is amplified and passed to an ADC 107 integrated to the Application Specific Integrated Circuit ASIC. The ADC takes some samples in the "ON" state and some samples in the "OFF" state. The difference between these is used as proximity signal. The proximity signal can be obtained by comparing the samples to a known reference value.

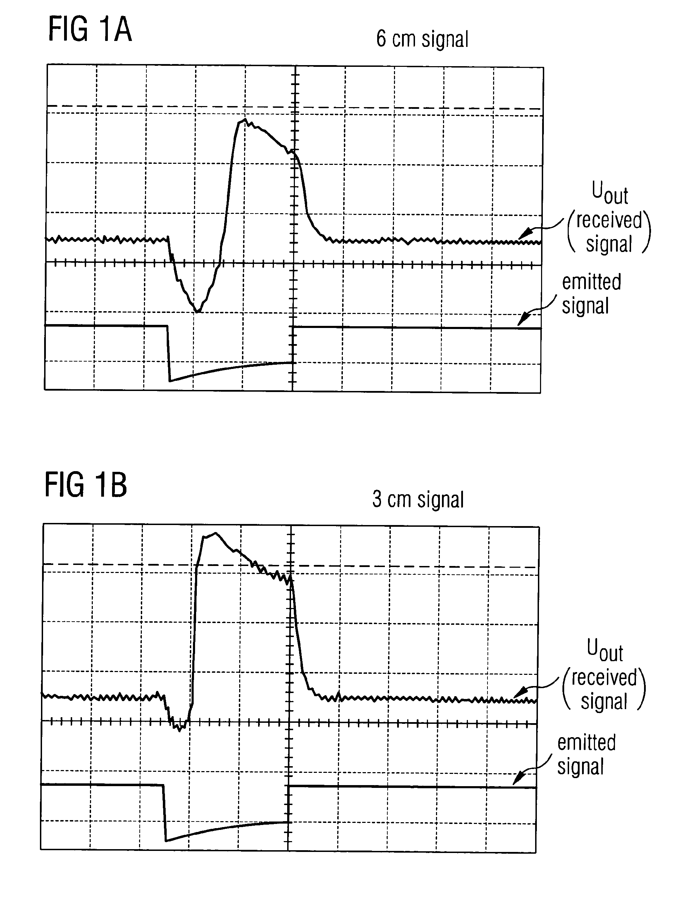

An example of the output of a transresistance amplifier (converting current to voltage) used in an alternative device for detecting the presence of an object is shown in Figures 1A and 1B, wherein a proximity detection response for an object (a Kodak grey card) first at 6 cm and then 3 cm distance is shown. The upper curve ($U_{OUT}$) illustrates the output of the sensor circuitry 106, whereas the lower curve (emitted signal) illustrates the input passed through the emitter circuitry to the emitter 101.

A problem associated with the alternative proximity detectors is the poor reliability of the proximity detection result. Further, the response time of the device is relatively long. The negative overshoot is caused by the amplifier DC offset.

An object of the present invention is to provide a device for detecting the presence of an object in a more reliable manner than before. This can be achieved as described in the independent patent claim.

Another object of the invention is the use of a differential amplifier in a specific way for obtaining a proximity detection signal in the manner enhancing the reliability of the proximity detection. This can be achieved in the manner as described in the second independent patent claim.

The dependent claims describe various preferred embodiments of the present invention.

An advantage of the invention is that the signal form obtained from the device is much better and can be better analyzed by the ADC. A malfunction of the proximity detector can cause serious hearing damage, for example, if the proximity detector is used for switching the mobile terminal between hands-free and handset modes.

Further advantages are that the photodiode needs not to be connected to ground. Further, even a low-cost operational amplifier can be used because neither offset nor gain are problematic. The signal forms are also pretty good for small photocurrents.

In the following, the invention is disclosed in more detail with reference to examples shown in accompanying drawings 2 to 5, of which:

Figures 1A and 1B      show the output signal of an alternative proximity detector obtained by using a Kodak grey card as reflecting object placed in front of the glass window at a distance of 6 and 3 cm, respectively,

Figure 1C            shows the basic functional block diagram of a proximity detector,

Figure 2              illustrates the adverse effect of distortions in the signal form of a proximity detector,

Figure 3A and 3B      show two circuits used for the sensor circuitry of an alternative proximity detector,

Figure 4              is a sensor circuit according to the present invention, and

Figures 5A and 5B     show the output of the new proximity detector using a Kodak grey card as reflecting object placed in front of the glass window at a distance of 6 and 3 cm, respectively.

The use of a pulsed light source for the detection of the presence of an object increases the challenges for design of the device. Were no pulse generation involved, basically any amplifier would do. The pulse mode is nevertheless used in order to save energy and to get higher receiving levels. Even though a signal with 1 to 5 $\mu$s rise and fall times can be properly amplified, the distorted signal form makes it problematic for the ADC to convert the signal properly.

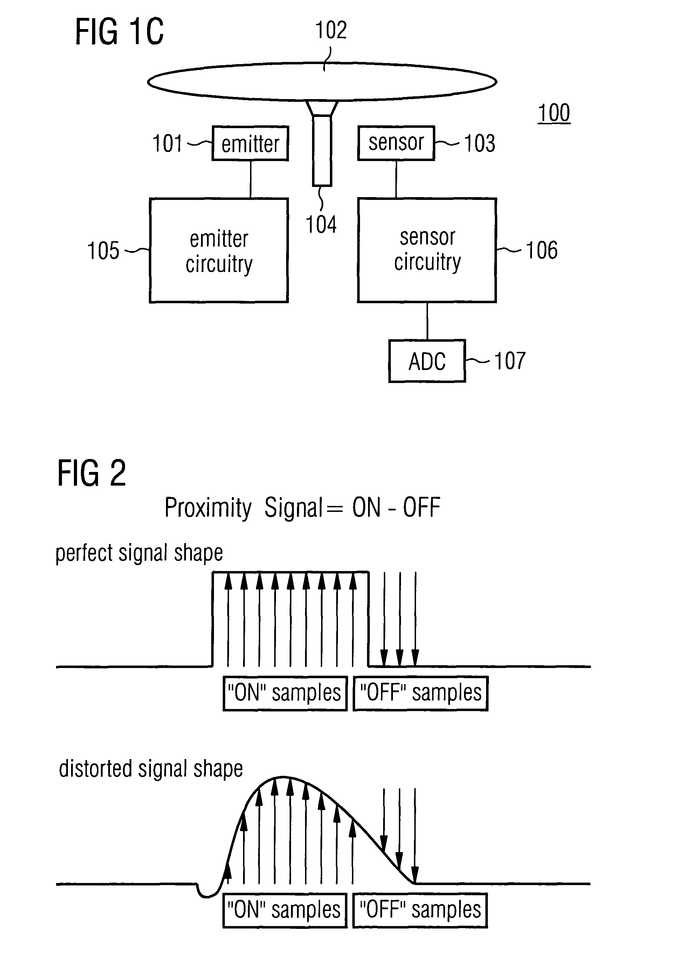

One basic observation behind the invention lies in that the shape of the signal of an alternative proximity detector has a non-optimal shape thus degrading the analog-to-digital conversion as shown in the lower pulse as in Figure 2. This signal form could, in principle, be still acceptable, but then the designer should select a better differential amplifier having a faster response time and better linearity. However, this is unacceptable from the cost point of view. Because the proximity detection result is obtained by substracting the "OFF" result from the "ON" result, the degradation of signal quality seriously ruins the performance of the proximity detector.

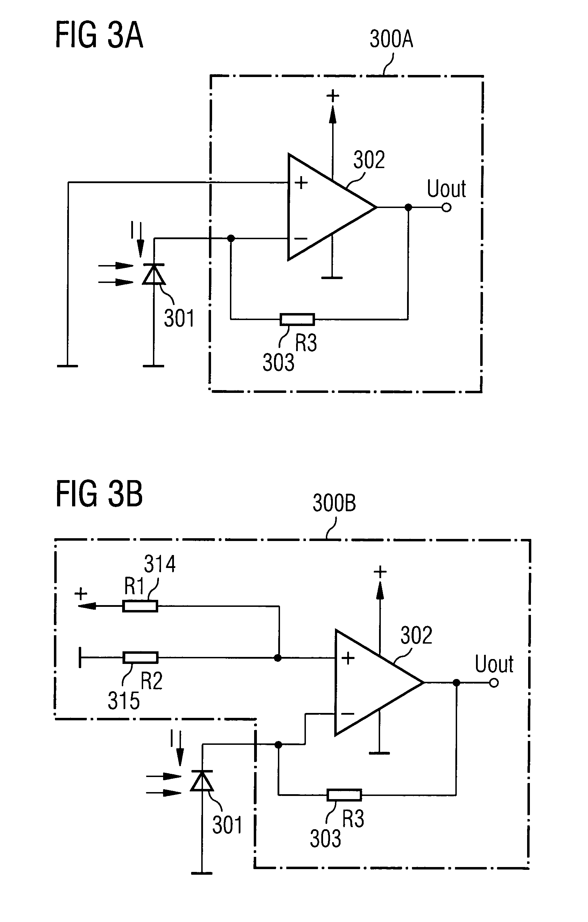

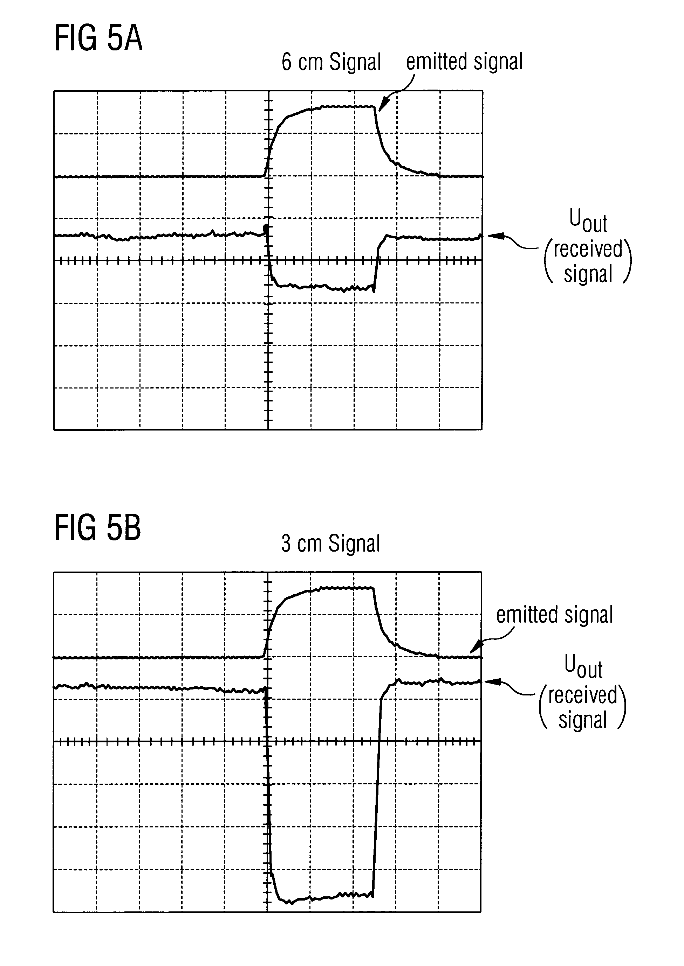

Figure 3A shows a circuit used for the detection part of some alternative proximity detectors. Photodiode 301, i.e. the sensor, corresponds to the sensor 221 in Figure 5 of pending European patent application 03003437.5. The cathode of the photodiode 301 is connected to the sensor circuitry, of which a part is shown. The anode of the photodiode has been grounded.

The sensor circuitry 300A includes an operational amplifier 302, to the inverting input of which the cathode of the photodiode 301 is connected. The amplification of the operational amplifier 302 is fixed to a suitable value, and the resistor 303 provides a shunt-shunt-feedback, because the circuit is used for converting a current signal I to voltage Uout.

The cut-off current (or reverse light current) is increasing when light is detected by the photodiode 301. The photocurrent is amplified with the feed-back resistor 303. The output voltage Uout is proportional to the input of photocurrent, namely

$$\text{Uout} = I_{ph} \, R3,$$

where R3 is the resistance of resistor 303.

Figure 3B shows another sensor circuitry 300B used in an alternative proximity detector. The structure is basically the same as that in Figure 3A, but now the output voltage Uout has some DC offset, the level of which has been adjusted by selecting a suitable combination of resistors 314 and 315. The resistor 314 connects a voltage source and the non-inverting input of the operational amplifier 302, and the resistor 315 connected to the ground.

Now the resistors 314 and 315 and the offset mechanism perform the task of input-offset voltage compensation. An offset is given by the potential divider (resistors 314 and 315) on the non-inverting input of the operational amplifier 302. This reduces but does not prevent the influence of the operational amplifier 302 offset at extremely small photocurrents, such as of range 10 nA. The resistance R2 of resistor 315 may be between 1 and 20 k$\Omega$ in order to give a slight offset for the operational amplifier 302; it is for additional amplifying of the signal. A small resistor decreases the gain and increases the independence of ambient light.

In the circuitries of Figures 3A and 3B the photodiode 301 has been grounded because of several reasons: the offset of the differential amplifier 302 has an influence to the signal but does not cause problems with some operational amplifiers. The circuitries have usually been optimized for one specific operational amplifier, and therefore whenever the operational amplifier has been changed, a new optimization for the new operational amplifier has been necessary.

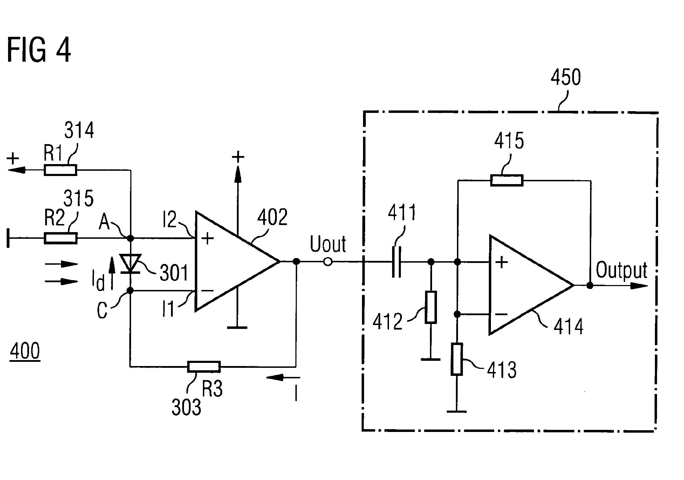

Figure 4 shows a sensor circuit 400 according to the present invention. Now the cathode C of the photodiode 301 is connected to a first input I1 of the differential amplifier 402, and the anode A of the photodiode 301 is connected to a second input I2 of the differential amplifier 402, a signal Uout of almost rectangular shape and with practically no ripple on the signal can be obtained.

In other words, the sensor circuitry 400 converts current $I_d$ passing through the photodiode 301 to output voltage Uout. This voltage Uout is then further fed through a filtering and amplifying circuit 450, wherein the high-pass filtering is performed by using a condensator 411 and resistor 412. The cut-off frequency $f_g$ of this filter is 1/2$\pi$RC. The

high-pass filtering is used to suppress the DC part caused by ambient light.

The amplifier 414 gain to which the filtered signal is fed can be adapted by using resistors 415 and 413 connected the inverting input of the amplifier 414. A shunt-shunt feedback is provided by connecting the output signal Output back to the inverting input of the amplifier 414 through resistor 415.

For AC signals

$$Uout = I_d \, R1 \, R2 \, / \, (R1 + R2) + I_d \, R3,$$

and for DC signals

$$Uout = I_d \, R2 + I_d \, R3.$$

The resistance R3 of resistor 303 can be very low or even zero, i.e the resistor 303 can be omitted. The dimensioning of the voltage divider ratio of R1 and R2 can be chosen so that the voltage level on the non-inverting input of the operational amplifier 402 is larger than the offset of the operational amplifier 402. This is the main reason why also different and even cheap operational amplifiers 402 can be used without changing the output level and without endangering the stability of the signal.

Figures 5A and 5B show the drastic improvement of the proximity detection signal quality. The signal has none or only slight overshoot, so the response time of the proximity detector wherein a sensor circuit according to the present invention is used can be thereby considerably shorter. This is important for the analysis and quality of the proximity-signal. The better the shape of the output signal Output is compared to the signal fed to the light emitter 101, the better the analog-to-digital conversion can be performed, and the better the quality of the proximity-signal will be. As a consequence the operational amplifier 402 does not need to be a high-end device such as Philips, National Semiconductors, Fairchild Semiconductors, or Texas Instruments OPA128 (with low input-offset, low noise and low input bias current), but practically a cheaper one such as LM321 (for some manufacturers LMV321) will do.

Although the invention was described above with reference to the examples shown in the appended drawings, it is obvious that the invention is not limited to these, but it may be modified by those skilled in the art without departing from the scope and the spirit of the invention.

**Claims**

1. A device (100) for detecting the presence of an object, comprising:

    - means (101) for emitting a light pulse;
    - a photodiode (301) for detecting a reflection of said emitted light caused by said object;
    - a differential amplifier (402) for producing a detection result; and
    - means (107) for converting the detection result to a logical value;

    wherein: the cathode (C) of the photodiode (301) is connected to a first input (I1) of the differential amplifier, and the anode (A) of the photodiode (301) is connected to a second input (I2) of the differential amplifier (402).

2. A device (100) for detecting the presence of an object according to claim 1, **wherein:** said first input (I1) of the differential amplifier (402) is the inverting input.

3. A device (100) for detecting the presence of an object according to claim 2, wherein: an output of the differential amplifier (402) is further connected to the inverting input (I1) for providing a shunt-shunt feedback.

4. A device (100) for detecting the presence of an object according to claim 1, 2, or 3, wherein: the differential amplifier (402) is an operational amplifier.

5. The use of a differential amplifier (402) in obtaining a proximity detection signal, wherein: the cathode (C) of a photodiode (301) is connected to a first input (I1) of the differential amplifier (402), and the anode (A) of a photodiode (301) is connected to a second input of the differential amplifier (402).

6. The use of differential amplifier (402) in obtaining a proximity detection signal according to claim 5, wherein: said first input (I1) of the differential amplifier (402) is the inverting input.

7.  The use of differential amplifier (402) in obtaining a proximity detection signal according to claim 6, wherein: the output of the differential amplifier (402) is further connected to the inverting input (I1) for providing a shunt-shunt feedback.

8.  The use of differential amplifier (402) in obtaining a proximity detection signal according to claim 5, 6, or 7, wherein: said differential amplifier (402) is an operational amplifier.

9.  A sensor circuitry (106) for a proximity detector (100), comprising a photodiode (301) and a differential amplifier (402), wherein: a cathode (C) of the photodiode (301) is connected to an inverting input (I1) of the differential amplifier (402), and an anode (A) of the photodiode (301) is connected to a non-inverting input (I2) of the differential amplifier (402).

## FIG 1A

6 cm signal

$U_{out}$ (received signal)

emitted signal

## FIG 1B

3 cm signal

$U_{out}$ (received signal)

emitted signal

# FIG 1C

102

100

101 emitter    sensor 103

104

105 emitter circuitry    sensor circuitry 106

ADC 107

# FIG 2

Proximity Signal = ON - OFF

perfect signal shape

"ON" samples    "OFF" samples

distorted signal shape

"ON" samples    "OFF" samples

# FIG 3A

300A

302

Uout

301

R3

303

# FIG 3B

300B

314

R1

302

Uout

R2

315

301

R3

303

FIG 4

## FIG 5A

6 cm Signal    emitted signal

$U_{out}$
$\left(\begin{array}{c}\text{received}\\\text{signal}\end{array}\right)$

## FIG 5B

3 cm Signal

emitted signal

$U_{out}$
$\left(\begin{array}{c}\text{received}\\\text{signal}\end{array}\right)$

**European Patent Office**

# EUROPEAN SEARCH REPORT

Application Number

EP 03 01 1911

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 007, no. 010 (P-168), 14 January 1983 (1983-01-14) & JP 57 166582 A (TOKYO SHIBAURA DENKI KK), 14 October 1982 (1982-10-14) * abstract * --- | 1-9 | H03K17/94 G01S17/02 H04M1/60 |
| X | US 5 592 033 A (GOLD JOHN H) 7 January 1997 (1997-01-07) * column 4, line 39 - column 6, line 59 * * figure 1 * --- | 1-9 | |
| A | WO 00 79766 A (ERICSSON TELEFON AB L M) 28 December 2000 (2000-12-28) * abstract * * page 1, line 1 - page 14, line 27 * * figures 1,4-6,11 * ----- | 1-9 | |
| | | | TECHNICAL FIELDS SEARCHED (Int.Cl.7) H03K G01S H04M |

The present search report has been drawn up for all claims

| Place of search | Date of completion of the search | Examiner |
|---|---|---|
| MUNICH | 27 August 2003 | Gavin Alarcon, O |

EPO FORM 1503 03.82 (P04C01)

**ANNEX TO THE EUROPEAN SEARCH REPORT
ON EUROPEAN PATENT APPLICATION NO.**

EP 03 01 1911

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2003

| Patent document cited in search report | | Publication date | Patent family member(s) | | Publication date |
|---|---|---|---|---|---|
| JP 57166582 | A | 14-10-1982 | NONE | | |
| US 5592033 | A | 07-01-1997 | NONE | | |
| WO 0079766 | A | 28-12-2000 | AU | 5584600 A | 09-01-2001 |
| | | | WO | 0079766 A1 | 28-12-2000 |
| | | | SE | 9902340 A | 22-12-2000 |

EPO FORM P0459

For more details about this annex : see Official Journal of the European Patent Office, No. 12/82